Europäisches Patentamt

European Patent Office

Office européen des brevets

(11) Veröffentlichungsnummer: **0 315 764 B1**

# (12) EUROPÄISCHE PATENTSCHRIFT

(45) Veröffentlichungstag der Patentschrift: **18.12.91**

(21) Anmeldenummer: **88115777.0**

(22) Anmeldetag: **24.09.88**

(51) Int. Cl.⁵: **B62D 55/30**, B62D 55/116, B62D 55/112

(54) **Vorrichtung für Laufwerksausbildungen von Kettenfahrzeugen mit Laufwerkszylindern.**

(30) Priorität: **07.11.87 DE 3737928**

(43) Veröffentlichungstag der Anmeldung:
**17.05.89 Patentblatt 89/20**

(45) Bekanntmachung des Hinweises auf die
Patenterteilung:
**18.12.91 Patentblatt 91/51**

(84) Benannte Vertragsstaaten:
**DE FR GB**

(56) Entgegenhaltungen:
**DE-A- 3 039 366
DE-A- 3 433 262
FR-A- 1 401 309
US-A- 3 614 125**

(73) Patentinhaber: **MaK System Gesellschaft mbH
Falckensteiner Strasse 2
W-2300 Kiel 17(DE)**

(72) Erfinder: **Matzen, Uwe
Gartenstrasse 5 B
W-2303 Gettorf(DE)**
Erfinder: **Iser, Klaus
Kuhlacker 43
W-2300 Kiel 14(DE)**

(74) Vertreter: **Hansmann, Dierk, Dipl.-Ing.
Jessenstrasse 4
W-2000 Hamburg 50(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Vorrichtung für Laufwerksausbildungen von Kettenfahrzeugen mit Laufwerkszylindern zur Aufnahme von Stütz- und Dämpfungskräften, wobei die Laufwerkszylinder zwischen verschwenkbaren Tragarmen mit Laufrollen und dem Fahrzeug angeordnet sind und jeder Laufwerkszylinder schwenkbar in der Fahrzeugwandung gelagert ist.

Bei derartigen Ausbildungen ist es bekannt, dem Laufwerkszylinder unterschiedliche Funktionen zuzuordnen, wie Niveauregelung gegebenenfalls mit Federungseigenschaften, zur Schwingungsdämpfung, zur zusätzlichen Abstützung der Laufräder in bestimmten Positionen.

Es sind Ausbildungen dieser Art gemäß DE-A-30 39 366 und DE-A-34 33 262 bekannt geworden, wobei ein fahrzeugfestes Auge in Verlängerung des Zylinderoberteils und eine laufrollenfeste Anbindung an der Kolbenstange ausgeführt ist.

Der Mangel dieser bekannten Anordnungen besteht darin, daß diese Zylinderanordnungen eine relativ große Baulänge besitzen und es erforderlich ist, Betätigungselemente im ungeschützten Bereich außerhalb des Fahrgestells den Laufwerkszylindern zuzuführen.

Die Aufgabe der Erfindung ist es, eine gattungsgemäße Vorrichtung zu schaffen, die eine Verringerung der Bauhöhe der Zylinderanordnung ermöglicht und einen Schutz der Stell- bzw. Betätigungselemente vor äußeren Einflüssen gewährleistet.

Die Lösung dieser Aufgabe erfolgt erfindungsgemäß dadurch, daß jeder Laufwerkszylinder über einen seitlichen Flansch gelagert ist und über den Flansch Stell- und/oder Betätigungselemente führbar sind.

Hierdurch ist es möglich, eine seitliche Anlenkung des Laufwerkszylinders mit einer geringen Bauhöhe auszubilden, und über den Flansch als Schwenkzapfen lassen sich die Stützkräfte durch die Ausbildung eines großen Durchmessers einer relativ dünnen Fahrzeugwandung über eine große Fläche verteilen. Es sind auch die Stell- bzw. Betätigungselemente gegen äußere Einwirkungen, wie Schmutz, Steinschlag und Fremdeinwirkung, geschützt.

Um die Laufwerkszylinder aus einer Ruheposition in eine Betriebsposition zu bringen, wird vorgeschlagen, daß der Flansch mit einer an der Innenraumseite der Fahrzeugwandung angeordneten Flanschplatte verschraubt ist, die mindestens in einem Teilbereich als Zahnsegment ausgebildet ist, in das ein Ritzel als Stellelement eingreift. Zur günstigen Verstellung von außen ist weiterhin vorgesehen, daß das Ritzel über ein Betätigungselement von außen verstellbar ist.

Zur Einstellung der Laufrollen und Arretierung ist vorgesehen, daß die Flanschplatte Ausnehmungen aufweist, die mit einem in der Fahrzeugwand verdrehbaren Bolzen zusammenwirken und in einer Stellung der Schwenkbereich der Flanschplatte über eine Kreiskontur des Bolzens festlegbar sowie in der anderen Stellung eine Arretierung des Laufwerkszylinders einstellbar ist.

In der Zeichnung sind Ausführungsbeispiele der Erfindung schematisch dargestellt. Es zeigen:

Fig. 1      einen mit einer Laufrolle fest verbundenen Laufwerkszylinder,

Fig. 2      einen Laufwerkszylinder mit einer Verstellung in zwei Positionen,

Fig. 3      eine vergrößerte Darstellung einer verstellbaren Flanschlagerung mit einem verdrehbaren Bolzen zur Arretierung oder Begrenzung der Schwenkbewegung

Fig. 4      eine Schnittdarstellung einer von außen verstellbaren Flanschausbildung gemäß Linie A-A der Fig. 3,

Fig.5      eine Schnittdarstellung eines selbsthemmenden Bolzens zur Arretierung gemäß Linie B-B der Fig. 3

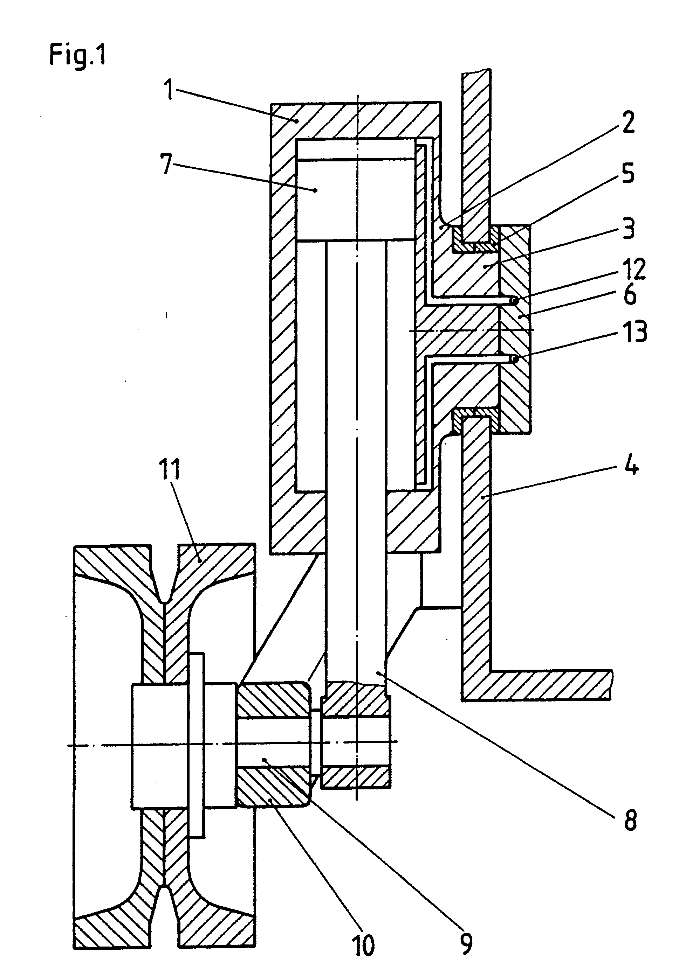

Ein dargestellter Laufwerkszylinder ist gemäß Fig. 1 mit einem seitlichen Flansch 2 und einem daran angebrachten Zapfen 3 in einer Ausnehmung einer Fahrzeugseitenwand 4 gebildet und mit Hilfe von Lagerschalen 5 schwenkbar angeordnet sowie axial durch einen Zapfendeckel 6 gehalten. In dem Laufwerkszylinder befindet sich ein Kolben 7 mit einer Kolbenstange 8, welche an einem rückwärtigen Teil einer Laufradwelle 9 drehbar gelagert ist. Die Laufradwelle 9 selbst befindet sich in einem Tragarm 10, welcher seinerseits schwenkbar in der Fahrzeugseitenwand 4 gelagert ist. Vorn auf der Laufradwelle 9 befindet sich ein Laufrad 11. Dieses kann über den Zylinder 1 mit dem Kolben 7 je nach hydraulischer Ansteuerung als Schwingungsdämpfer, als hydraulisches Federelement oder auch als Blockierelement für eine mechanische Federung verwendet werden. Entsprechende hydraulische Anschlußleitungen 12, 13 werden durch den Zapfen 3 und den Flansch 2 geführt und sind gegen Einwirkung von Schmutz und Fremdgegenstände geschützt.

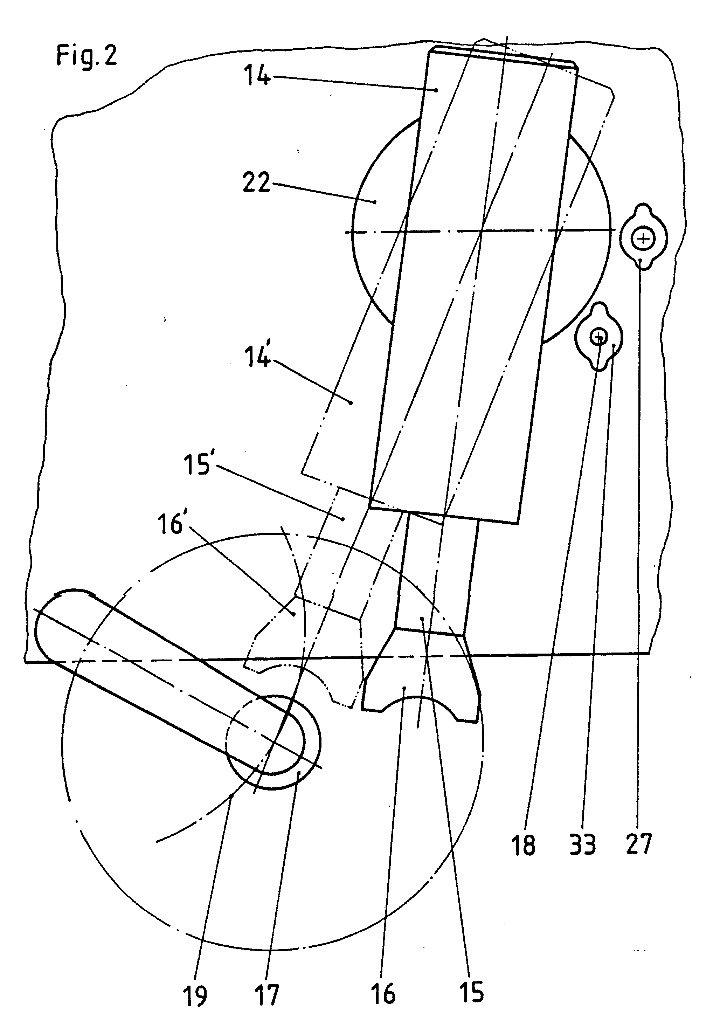

In einer weiteren Ausführungsform gemäß Fig. 2 ist ein Laufwerkszylinder 14, zwischen zwei Positionen 14, 14', hin- und herschwenkbar. Er wird in diesem Fall als zuschaltbarer Stütz- und Blockierzylinder für eine Laufrolle verwendet. In der Stellung 14 ist die Kolbenstange 15 mit einer Stützschale 16 in den Zylinder eingefahren. Die zugehörige Laufrolle kann mit ihrem rückwärtigen Wellenzapfen 17 frei an dem Zylinder 14 vorbeischwingen.

In der anderen Position 14' greift die Stützschale 16' in die Bewegungsbahn 19 des Wellenzapfens 17 ein. Dieser wird beim Hinausdrücken der Kolbenstange 15' nach unten gedrückt. Die Federung der Laufrolle wird dadurch blockiert.

Funktionsbedingt ist die Position 14 eindeutig durch den Bolzen 18 festgelegt. Der Bolzen 18 bestimmt außerdem die Lage der Position 14', in der allerdings der Zylinder um den kleinen Winkelbereich schwenkfähig bleibt, damit er der Einfederungsbahn 19 des Wellenzapfens 17 folgen kann.

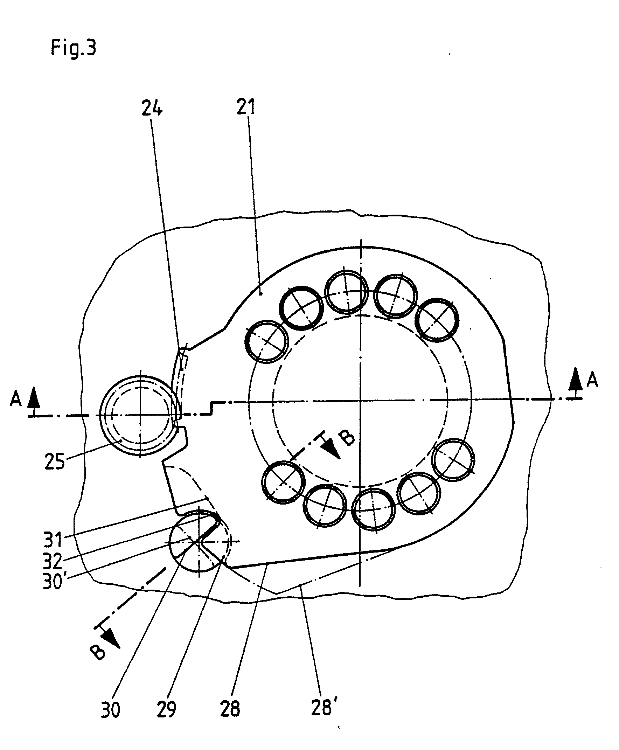

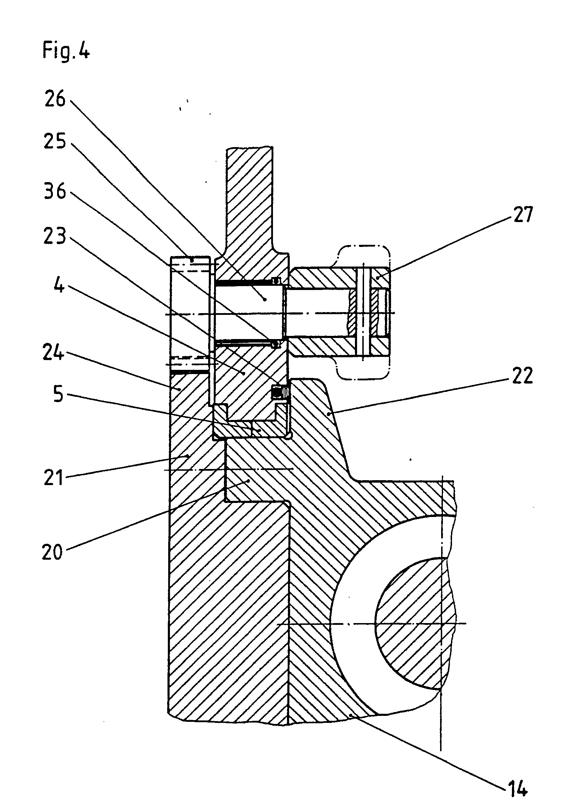

Eine Ausführungsform der Verstell- und Positioniereinrichtung für die beiden beschriebenen Zylinderpositionen ist gemäß Fig. 3 bis 5 näher erläutert. Der Laufwerkszylinder 14 ist mit einem Zwischenteil 20 in der Fahrzeugseitenwand 4 über die beiden Lagerschalen 5 drehbar angeordnet. Die von innen gegengeschraubte Flanschplatte 21 sorgt für die axiale Fixierung des Laufwerkszylinders 14 in der Seitenwand 4.

Der Zylinderflansch 22, vergleiche auch Fig. 2, dient in Verbindung mit einem Dichtelement 23 in der Seitenwand 4 zum Schutz der Lagerschalen 5 vor Verschmutzung von außen. Dieses Dichtelement 23 bewirkt außerdem eine Erhöhung der Reibungskraft für die Schwenkbewegung, so daß der Laufwerkszylinder 14 in einer einmal eingestellten Stellung angeordnet bleibt, solange nicht äußere Kräfte auf diesen einwirken.

Die Flanschplatte 21 enthält an ihrem äußeren Umfang ein Zahnsegment 24, welches mit einem Ritzel 25 zusammenarbeitet. Dieses Ritzel 25 ist mit seiner Welle 26 in der Seitenwand 4 gelagert und trägt auf der Außenseite der Fahrzeugwandung 4 einen Betätigungsknebel 27. Bei einer Verdrehung des Betätigungsknebels 27, beispielsweise unter Verwendung eines Aufsteckwerkzeuges, wird der Laufwerkszylinder zwischen den beiden Positionen 14,14' gemäß Fig. 2 hin- und hergeschwenkt. Diese Schwenkbewegung wird auch in Fig. 3 durch die beiden Konturen 28,28' angedeutet.

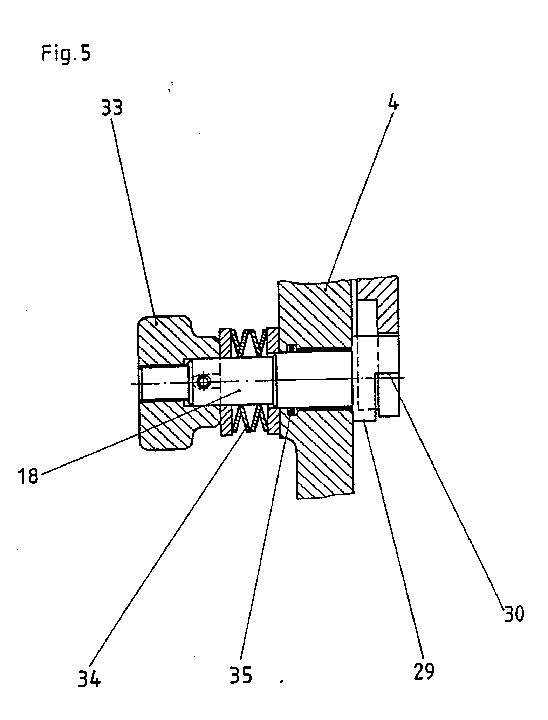

Die Schwenkbewegung wird begrenzt durch den Bolzen 18, vergleiche auch Fig. 5, welcher in der Fahrzeugseitenwand 4 gelagert ist und auf der Innenseite zwei Konturen 29,30 enthält, die sich in unterschiedlichen Ebenen befinden. Die Kontur 29 ist beispielsweise eine Kreiskontur, welche mit der Einfräsung 31 im Flansch in Eingriff steht. Beide zusammen legen den möglichen Schwenkwinkel des Laufwerkszylinders 14 fest, vergleiche wieder die Konturen 28,28'. Die Kontur 30 ist beispielsweise eine Halbkreiskontur, welche entweder in der Position 30 oder in der Position 30' angeordnet sein kann. In der Position 30 arretiert sie den Zylinder 14 entsprechend der Kontur 28 in der Ruheposition 14 (Fig. 2), indem sie in eine Ausnehmung 32 der Flanschplatte 21 eingreift. Diese Position ist im übrigen selbstsichernd, weil eine Bewegung des Laufwerkszylinders durch äußere Kräfte in der einen Richtung durch die Kreiskontur 29 verhindert wird und in der Gegenrichtung auf den Außenradius der Kontur 30 stößt, so daß diese zusätzlich in Richtung auf Arretieren gedreht wird.

Dreht man den Bolzen 18 mit Hilfe des Betätigungshebels 33 um 90 Grad in die Position 30', so wird die Flanschplatte 21 freigegeben und kann zusammen mit dem Laufwerkszylinder 14 mit Hilfe des Ritzels 25 in die Stützposition 28' verdreht werden. In dieser ist eine zusätzliche Arretierung nicht erforderlich, weil einerseits der Laufwerkszylinder in seinem Schwenklager selbsthemmend gelagert ist und er andererseits nach dem Ausfahren durch den Wellenzapfen 17 der Laufradwelle geführt wird. Der Arretierbolzen 18 ist in der Fahrzeugseitenwand 4 ebenfalls selbsthemmend gelagert, wobei die Selbsthemmung durch vorgespannte Federelemente 34 eingestellt ist. Sowohl der Bolzen 18 als auch die Ritzelwelle 26 sind durch Dichtelemente 35,36 gegen Eindringen von Schmutz und Fremdkörper geschützt.

Die Arretierung des Laufwerkszylinder 14 in den beiden Positionen 14,14' kann selbstverständlich auch durch Schnappelemente zwischen der Fahrzeugseitenwand 4 und der Flanschplatte 21 vorgenommen werden. In diesem Fall erübrigt sich der Arretierbolzen 18.

## Patentansprüche

1. Vorrichtung für Laufwerksausbildungen von Kettenfahrzeugen mit Laufwerkszylindern (1,14) zur Aufnahme von Stütz- und Dämpfungskräften, wobei die Laufwerkszylinder (1,14) zwischen verschwenkbaren Tragarmen mit Laufrollen (11) und dem Fahrzeug angeordnet sind und jeder Laufwerkszylinder (1,14) schwenkbar in der Fahrzeugwandung (4) gelagert ist, dadurch gekennzeichnet, daß jeder Laufwerkszylinder (1,14) über einen radial seitlichen Flansch (22) gelagert ist und über den Flansch (22) Stell- und/oder Betätigungselemente (25,27,33) führbar sind.

2. Vorrichtung nach Anspruch 1, dadurch gekennzeichnet, daß der Flansch (22) mit einer an der Innenraumseite der Fahrzeugwandung (4) angeordneten Flanschplatte (21) verschraubt ist, die mindestens in einem Teilbereich als Zahnsegment (24) ausgebildet ist, in das ein Ritzel (25) als Stellelement eingreift.

3. Vorrichtung nach Anspruch 2, dadurch gekennzeichnet, daß das Ritzel (25) über ein Betätigungselement (27) von außen verstellbar ist.

4. Vorrichtung nach einem der Ansprüche 1 bis 3, dadurch gekennzeichnet, daß die Flanschplatte (21) Ausnehmungen (32) aufweist, die mit einem in der Fahrzeugwand (4) fahrzeugfesten verdrehbaren Bolzen (18) zusammenwirken und in einer Stellung der Schwenkbereich der Flanschplatte (31) über eine Kreiskontur (29) des Bolzens (18) festlegbar sowie in der anderen Stellung eine Arretierung des Laufwerkszylinders (1,14) einstellbar ist.

## Claims

1. Device for running gear arrangements of tracklaying vehicles with running gear cylinders (1, 14) for absorbing support and damping forces, the running gear cylinders (1, 14) being arranged between pivotable control arms with track rollers (11) and the vehicle, and each running gear cylinder (1, 14) being pivotably mounted in the vehicle wall (4), characterised in that each running gear cylinder (1, 14) is mounted via a radially lateral flange (22), and control and/or operating members (25, 27, 33) can be guided via the flange (22).

2. Device according to claim 1, characterised in that the flange (22) is screwed to a flange plate (21), which is arranged on the interior side of the vehicle wall (4) and at least a part of which is formed as a toothed segment (24), with which a pinion (25) engages as control member.

3. Device according to claim 2, characterised in that the pinion (25) can be adjusted from outside via an operating member (27).

4. Device according to one of claims 1 to 3, characterised in that the flange plate (21) comprises recesses (32) which co-operate with a pin (18) which can rotate in the vehicle wall (4), and the pivot range of the flange plate (31) can be determined in one position via a circular contour (29) of the pin (18), while the running gear cylinder (1, 14) can be locked in the other position.

## Revendications

1. Dispositif pour mécanismes de roulement de véhicules à chenilles, qui comporte des cylindres de mécanisme de roulement (1, 14) pour l'absorption d'efforts d'appui et d'amortissement, les cylindres de mécanisme de roulement (1, 14) étant prévus entre des bras portants pouvant pivoter munis de galets de roulement (11) et le véhicule, et chacun des cylindres de mécanisme de roulement (1, 14) étant monté de façon à pouvoir pivoter dans la paroi (4) du véhicule, le dispositif étant caractérisé en ce que chacun des cylindres de mécanisme de roulement (1, 14) est monté par l'intermédiaire d'une bride (22) latérale dans le sens radial et en ce que, par la bride (22), peuvent être guidés des éléments de réglage et / ou d'actionnement (25, 27, 33).

2. Dispositif suivant la revendication 1, caractérisé en ce que la bride (22) est fixée par vissage à une plaque de bride (21) prévue au côté espace interne de la paroi (4) du véhicule, plaque de bride (21) qui, au moins dans une zone partielle, se présente sous la forme d'un segment denté (24) dans lequel engrène, comme élément de réglage, un pignon (25).

3. Dispositif suivant la revendication 2, caractérisé en ce que le pignon (25) peut être déplacé de l'extérieur à l'intervention d'un élément d'actionnement (27).

4. Dispositif suivant l'une quelconque des revendications 1 à 3, caractérisé en ce que la plaque de bride (21) présente des ouvertures (32) qui coopèrent avec un axe (18) pouvant tourner fixé au véhicule, dans la paroi (4) de celui-ci, et peut être fixée dans une position de sa zone de pivotement grâce à une partie de profil circulaire (29) prévue sur l'axe (18), tandis que pour l'autre position, un arrêt du cylindre de mécanisme de roulement (1, 14) peut être réglé.

Fig.1

EP 0 315 764 B1

Fig. 2

6

Fig.3

Fig.4

Fig.5